# EUROPÄISCHE PATENTSCHRIFT

(11) **EP 3 682 515 B1**
(45) Veröffentlichungstag und Bekanntmachung des Hinweises auf die Patenterteilung: **15.06.2022**
(21) Anmeldenummer: 18734800.8
(22) Anmeldetag: 27.06.2018
(51) Int. Cl.: H02G 15/013, H01R 13/52, H01R 4/70, H01R 4/62

(54) **KABELABDICHTUNG MIT EINEM GEHÄUSE SOWIE ANORDNUNG MIT DER KABELABDICHTUNG**
CABLE SEALING MEANS AND ASSEMBLY WITH THE CABLE SEALING MEANS
MOYENS D'ÉTANCHÉITÉ POUR CÂBLE ET ENSEMBLE COMPRENANT LES MOYENS D'ÉTANCHÉITÉ

(30) Priorität: 15.09.2017 DE 102017121459
(43) Veröffentlichungstag der Anmeldung: 22.07.2020
(73) Patentinhaber: Auto-Kabel Management GmbH, 79688 Hausen i.W. (DE)
(72) Erfinder: LIENERT, Andreas, 41844 Wegberg-Arsbeck (DE); ATTARZADEH, Amir, 41179 Mönchengladbach (DE); BODEM, Ralf, 40670 Meerbusch (DE)
(74) Vertreter: Cohausz & Florack
(86) Internationale Anmeldenummer: PCT/EP2018/067203
(87) Internationale Veröffentlichungsnummer: WO 2019/052703

(56) Entgegenhaltungen:
- WO-A1-2011/061074
- DE-B3-102004 056 859
- FR-A1- 2 826 794
- JP-A- 2007 250 397
- US-A- 4 018 979

## Beschreibung

Der Gegenstand betrifft eine Kabelabdichtung sowie eine Anordnung mit einem Gehäuse und einem Steckelement sowie einem Kabel.

Im Bereich des Automobilbaus ist die elektrische Verkabelung sicherheitsrelevant. Da Fahrzeuge in der Regel sich verändernden Umweltbedingungen ausgesetzt sind, wie Regen, Spritzwasser, Streusalz, starken Temperaturschwankungen und dergleichen, sind elektrische Verbindungen stets Fehlerquellen im Hinblick auf Korrosion. Insbesondere bei Batterieleitungen, welche ggf. auch dauerhaft mit dem Batteriepluspotenzial belegt sind, kann Kontaktkorrosion durch die an der Leitung anliegende Spannung gefördert werden.

Eine elektrische Verbindung gemäß dem Oberbegriff des Anspruchs 1 ist von JP-2007 250 397 bekannt.

Verbindungen zwischen zwei elektrischen Leitungen werden in der Regel über einen Kabelschuh und entsprechende Verschraubungen realisiert. Hierbei ist es wichtig, dass die Verbindungsstelle gegenüber eindringender Feuchtigkeit geschützt ist. Dies wird heutzutage in der Regel durch einen Schrumpfschlauch realisiert, welcher über die Verbindungsstelle gelegt ist und anschließend verschrumpft wird. Ein solcher Schrumpfschlauch, insbesondere in Verbindung mit silikonummantelten Kabeln, ist jedoch problematisch im Hinblick auf Längswasser, welches zwischen Schrumpfschlauch und Kabelisolation kriecht. Eine vollständige Abdichtung ist hier kaum erreichbar.

Insbesondere bei Batteriekabeln oder anderen Hochvoltanwendungen in der Kraftfahrzeugindustrie ist auch die sogenannte Wattiefe ein relevantes Kriterium. Fahrzeuge können nur bis zu einer bestimmten Tiefe in Wasser eintauchen. Diese Tiefe nennt sich Wattiefe. Eine Unterflurverlegung von Batterieleitungen führt dazu, dass die Kabel ggf. unterhalb der Wattiefe des Fahrzeugs liegen. Insbesondere besteht die Gefahr, dass beim Eintauchen von unterflurverlegten elektrischen Leitungen in Wasser diese dauerhaft Schaden nehmen können.

Aus diesem Grunde lag dem Gegenstand die Aufgabe zu Grunde, die Verbindung zwischen zumindest zwei elektrischen Leitungen innerhalb eines Kraftfahrzeugs gegenüber Feuchtigkeit zu schützen.

Diese Aufgabe wird gegenständlich durch eine Kabelabdichtung nach Anspruch 1 und eine Anordnung nach Anspruch 15 gelöst.

Die gegenständliche Kabelabdichtung ist insbesondere eine Einzeladerabdichtung, durch die ein isoliertes Kabel geführt werden kann. In das Gehäuse können aber auch mehrere Kabel durch jeweils eine Öffnung eingeführt sein, wobei jede Öffnung in der beschriebenen Weise abgedichtet ist.

An vielen Stellen im Fahrzeug müssen intermetallische Verbindungen vor Wasser, insbesondere Spritzwasser geschützt werden. Dies ist insbesondere dann relevant, wenn die intermetallischen Verbindungen nicht sortenrein sind. Dies ist beispielsweise häufig der Fall, wenn auf Flachleitungen Anschraubbolzen oder sonstige Bolzen befestigt werden. Die Bolzen sind in der Regel aus Edelstahl oder Kupferlegierungen, beispielsweise Messing und die Flachleitung ist aus Aluminium. Andere sortenunreine Verbindungen sind ebenfalls möglich. Zum Schutz dieser Verbindungen eignen sich Kabelabdichtungen, die ein Gehäuse um die intermetallische Verbindung bilden.

Ein solches Gehäuse ist aus einem Oberteil und einem Unterteil gebildet. Oberteil und Unterteil können jeweils schalenförmig sein und im Fügezustand das Gehäuse bilden. Innerhalb des Gehäuses ist im Fügezustand das Kabel mit seiner intermetallischen Verbindung zu z.B. einem anderen Kabel oder einem Anschlussbolzen oder einem anderen Anschlussteil angeordnet. Die Gestaltung des Gehäuses aus Oberteil und Unterteil hat den Vorteil, dass entlang des Kabelstrangs an jeder Stelle ein Gehäuse angeordnet werden kann. Dies kann auch noch nach der initialen Fertigung geschehen, in dem die Oberschale auf die Unterschale aufgesetzt wird. Problematisch ist jedoch die Abdichtung des Gehäuses im Bereich der Fügefläche zwischen Oberteil und Unterteil, insbesondere im Bereich der Kabeleinführung. Da die Kabeleinführung gleichzeitig eine axiale Abdichtung des Kabels gewährleisten muss, sind die Vorsprünge vorgesehen. Diese sich zu dem Vorsprung fügenden Vorsprünge müssen auch radial im Bereich der Fügestelle dicht sein. Hierzu wird vorgeschlagen, dass das Koppelelement so ausgelegt ist, dass es eine Anpresskraft zwischen Oberteil und Unterteil im gefügten Zustand ausüben kann. Dies kann über ein Steckelement erfolgen, welches auf den Vorsprung und somit über das Koppelelement geschoben werden kann.

Zur Einführung des Kabels in das Gehäuse ist eine Öffnung in dem Gehäuse vorgesehen. Diese Öffnung ist gegenständlich in einem Bereich zwischen dem Oberteil und dem Unterteil gebildet. Wird das Oberteil auf das Unterteil gesetzt, so liegen Seitenwände von Oberteil und Unterteil aneinander an. In einem Bereich einer Wand hat entweder das Oberteil oder das Unterteil oder Ober- und Unterteil jeweils eine Ausnehmung, die im Fügezustand des Gehäuses die Öffnung bildet. Ausgehend von dieser Öffnung erstreckt sich in einer axialen Richtung nach außen ein Vorsprung an dem Oberteil als auch an dem Unterteil.

Eine axiale Richtung ist durch eine Einschubrichtung des Kabels in die Öffnung definiert. Als axiale Richtung kann somit insbesondere eine Richtung verstanden werden, die quer, vorzugsweise im Wesentlichen rechtwinklig zu der Außenfläche verläuft, in der die Öffnung gebildet ist. Die axiale Richtung ist insbesondere parallel zur Flächennormalen der Oberfläche, in der die Öffnung im Fügezustand des Gehäuses gebildet ist.

Rechtwinklig zur axialen Richtung verläuft eine radiale Richtung. Die radiale Richtung ist vorzugsweise die Erstreckungsrichtung der Öffnung. Die radiale Richtung erstreckt sich vorzugsweise von einem Mittelpunkt der Öffnung nach außen. Die Öffnung kann oval, rechtwinklig, rechteckig, rund oder dergleichen sein. Die Öffnung ist insbesondere an den Kabelquerschnitt angepasst, welcher insbesondere rechteckig bei einem Flachkabel oder rund bei einem Rundkabel sein kann.

Im Fügezustand ist das Oberteil auf das Unterteil aufgesetzt und an einer Außenwand des Gehäuses bildet sich aus den Ausnehmungen an Oberteil und/oder Unterteil die Öffnung. Ausgehend von dieser Öffnung erstrecken sich jeweils Vorsprünge, die im Fügezustand aneinander anliegen und die Öffnung vorzugsweise umlaufend umgreifen. Die Vorsprünge sind jeweils an einem Oberteil und einem Unterteil angeordnet. Die Vorsprünge umgreifen die jeweiligen Ausnehmungen halbkreisförmig. Die beiden Vorsprünge an Oberteil und Unterteil haben an ihren Seitenwänden Stirnflächen, die einander zuweisen und im Fügezustand zumindest in Teilen an Berührflächen aneinander anliegen. Die Stirnflächen sind die sich von Gehäuse weg erstreckenden Kanten der Vorsprünge. Ein Vorsprung hat zwei solche Stirnflächen. Von außen gesehen bilden die aneinander anliegenden Vorsprünge eine erste Öffnung, die sich nach innen in Richtung des Gehäuses bzw. der Außenwand des Gehäuses erstreckt. Die Vorsprünge liegen aneinander an und bilden im gefügten Zustand einen vorzugsweise geschlossenen Ring. Die Vorsprünge bilden einen äußeren Teil der Öffnung und in der Außenwand des Gehäuses ist ein innerer Teil der Öffnung gebildet. Der durch die Vorsprünge gebildete äußere Teil der Öffnung dient zur Aufnahme eines Steckelements, insbesondere einer Dichtung eines Steckelements, wie nachfolgend noch beschrieben werden wird.

Zum Fügen von Oberteil und Unterteil werden diese zunächst aufeinander aufgesetzt. Dabei liegen dann die Vorsprünge an ihren Berührflächen aneinander an. Insbesondere liegen die Vorsprünge auf einander gegenüberliegenden Seiten des Innenteils der Öffnung an einander an. An diesen an einander anliegenden Teilen der Vorsprünge sind jeweils radial nach außen weisende Teilkoppelelemente vorgesehen. An dem Vorsprung eines Oberteils als auch auf dem Vorsprung eines Unterteils erstreckt sich ausgehend von der Umfangsfläche des Vorsprungs ein Teilkoppelelement in radialer Richtung nach außen. Das Teilkoppelelement hat darüber hinaus eine Erstreckung in axialer Richtung. Ein Teilkoppelelement ragt somit radial aus der äußeren Mantelfläche des Vorsprungs hervor und erstreckt sich zumindest in Teilen axial entlang des Vorsprungs. Die axiale Erstreckung des Teilkoppelelements ist insbesondere ausgehend von der Außenwand des Gehäuses entlang der axialen Erstreckung des Vorsprungs. Ein Teilkoppelelement kann axial vor einer stirnseitigen Kante eines Vorsprungs enden, so dass ein Bereich des Vorsprungs in axialer Richtung frei von einem Teilkoppelelement ist.

Das Teilkoppelelement erstreckt sich entlang einer Fügekante zwischen jeweils einem Vorsprung des Oberteils und einem Vorsprung des Unterteils. Im Fügezustand werden die Vorsprünge auf ihren Stirnflächen (Fügekanten) aufeinander gelegt. Das Teilkoppelement erstreckt sich von der Fügekante, entlang der äußeren Mantelfläche des Vorsprungs, senkrecht zur axialen Richtung. Diese Erstreckung kann als Erstreckung in der Breite verstanden werden. Die Erstreckung entlang der axialen Richtung kann als Erstreckung in der Länge verstanden werden. Die Erstreckung in radialer Richtung kann als Erstreckung in der Tiefe verstanden werden.

Im Fügezustand bilden die beiden Teilkoppelelemente der beiden Vorsprünge ein Koppelelement. Das Koppelelement dient im Fügezustand zur Aufnahme einer Anpresskraft, mit welchem Oberteil und Unterteil aneinander angepresst werden, Insbesondere wird eine Anpresskraft im Bereich der Stirnflächen ausgeübt, so dass insbesondere im Bereich der Berührflächen eine Dichtung bewirkt wird. Das Koppelement kann sich in axialer Richtung verjüngen. Auch kann ein Steckelement, welches auf den Vorsprung aufgesteckt wird, eine Aufnahme für das Koppelelement aufweisen und die Aufnahme kann sich in axialer Richtung verjüngen. In beiden Fällen wirkt durch die Verjüngung eine Kraft auf das Koppelement, mit welchem Oberteil und Unterteil aufeinander gedrückt werden. Dabei kann sich die Erstreckung in der Breite des Koppelelements und/oder der Aufnahme ausgehend vom Gehäuse in Richtung der stirnseitigen Kante des Vorsprungs verringern. Ausgehend von der Außenwand des Gehäuses in Richtung einer stirnseitigen Kante des Vorsprungs verjüngt sich das aus den Teilkoppelelementen gebildete Koppelelement oder die Aufnahme des Steckelements verjüngt sich entlang ihrer Ausdehnung in axialer Richtung. Auch kann die Verjüngung in nur einem der Teilkoppelelemente gebildet sein oder beide Teilkoppelelemente können zur Verjüngung beitragen.

Durch dieses sich verjüngende Koppelelement bzw. die verjüngende Aufnahme ist es möglich, mit Hilfe eines Steckelementes, welches auf das Koppelelement aufgeschoben wird, eine Anpresskraft der Fügekanten der Vorsprünge zueinander zu bewirken. Ein Steckelement kann eine zu dem Koppelelement korrespondierende Ausnehmung aufweisen, wobei die Ausnehmung jedoch vorzugsweise nur eine Erstreckung in der Breite hat, wie das Koppelelement im Bereich an seiner in der Breite schmalsten Stelle, so dass beim weiteren Aufschieben des Steckelements auf die Vorsprünge, mithin der Ausnehmung auf das Koppelelement, die Seitenwände der Ausnehmung die Teilkoppelelemente aufeinander drücken.

Somit wird durch die Teilkoppelelemente, die im Fügezustand sich zu einem einzigen Koppelelement ergänzen, eine Befestigung und Abdichtung von Oberteil und Unterteil des Gehäuses miteinander, insbesondere im Bereich des Vorsprungs ermöglicht.

Es versteht sich, dass es auch möglich ist, dass sich die Ausnehmung des Steckelements in der Breite verjüngt und das Koppelelement eine konstante Erstreckung in der Breite hat. Auch können sowohl Ausnehmung und Koppelelement eine Verjüngung in der Breite aufweisen. Somit verjüngt sich die Breite der Ausnehmung in Einschubrichtung des Koppelelements.

Wie bereits erläutert, umschreiben die Vorsprünge die Öffnung an der Außenwand des Gehäuses. Somit sind die Vorsprünge halbkreisförmig. An den jeweiligen Fügekanten entstehen Berührflächen, an denen sich die Vorsprünge jeweils berühren. Ein Vorsprung hat in der Regel zwei Stirnflächen, deren Berührflächen in Kontakt mit den korrespondierenden Berührflächen des anderen Vorsprungs kommen. Um eine gute Abdichtung zu ermöglichen, sind die Stirnflächen bevorzugt in Nut und Feder Form gebildet, so dass eine Stirnfläche als Nut gebildet und die dazu korrespondierende Stirnfläche als Feder. Dies führt zu einem Schutz der Berührflächen, welche die eigentliche Abdichtung zwischen den Vorsprüngen bewirken.

Gemäß einem Ausführungsbeispiel wird vorgeschlagen, dass die Berührfläche von zumindest einem ersten der Vorsprünge eine Weichkomponente aufweist und dass die Berührfläche von einem zweiten an dem ersten Vorsprung anliegenden Vorsprung ein im Fügezustand in die Weichkomponente eingreifenden, als Hartkomponente gebildete Erhebung aufweist. Die Weichkomponente ist insbesondere als Dichtung ausgeführt. Insbesondere ist die Weichkomponente im Bereich derjenigen Stirnfläche, die als Feder geformt ist. Radial von innen nach außen ist die Stirnfläche durch zunächst die Weichkomponente und anschließend die Feder gebildet. Somit schützt die Nut-Federkombination die Weichkomponente vor Einflüssen von außen.

Auf der anderen Seite ist die dazu korrespondierende Stirnfläche vorzugsweise ohne eine Weichkomponente und beispielsweise nur durch eine Hartkomponente gebildet. In dieser Hartkomponente kann eine axial verlaufende Erhebung vorgesehen sein. Die Erhebung kann auch durch eine Nutwand, in welche die Feder der anderen Stirnfläche eingreift, gebildet sein. Die Erhebung kann in die Weichkomponente im Fügezustand eingreifen. Dadurch wird die Weichkomponente komprimiert und es entsteht eine optimierte Abdichtung im Bereich der Stirnfläche.

Die Weichkomponente ist vorzugsweise umlaufend entlang einer umlaufenden Berührfläche zwischen dem Oberteil und dem Unterteil angeordnet. Die Erhebung ist ebenso vorzugsweise entsprechend der Weichkomponente umlaufend entlang der umlaufenden Berührfläche zwischen dem Oberteil und dem Unterteil des Gehäuses gebildet. Die Erhebung ist vorzugsweise mittig auf der Stirnfläche mit jeweils einem gleichen Abstand zu einer Außenkante der Stirnfläche auf der Stirnfläche angeordnet.

Gemäß einem Ausführungsbeispiel wird vorgeschlagen, dass sich die Stirnflächen axial entlang des Vorsprungs erstrecken. Das Gehäuseoberteil liegt an dem Gehäuseunterteil auch entlang des Vorsprungs an. Die beiden Vorsprünge, die aneinander anliegen, erstrecken sich in axialer Richtung und die Stirnflächen liegen auch in axialer Richtung im Bereich der Vorsprünge aneinander an. Vorzugsweise enden die Berührflächen im Bereich der stirnseitigen Kante des Vorsprungs, insbesondere wenige Zehntelmillimeter vor der stirnseitigen Kante des Vorsprungs.

Gemäß einem Ausführungsbeispiel wird vorgeschlagen, dass die Stirnfläche radial von innen nach außen durch zunächst eine Weichkomponente und dann eine Hartkomponente gebildet ist. Die Hartkomponente überragt die Weichkomponente in einer Projektion parallel zur Stirnfläche. Betrachtet man den Verlauf der Stirnfläche radial nach außen, so können zunächst die Weichkomponente und anschließend die Hartkomponente angeordnet sein. Hierbei kann die Hartkomponente eine Höhenerstreckung, welche sich senkrecht zur Stirnfläche erstreckt, aufweisen, die größer ist, als die Höhenerstreckung der Weichkomponente. Die Hartkomponente ist dabei vorzugsweise als Feder gebildet, welcher in eine korrespondierende Nut der korrespondierenden Stirnfläche des korrespondierenden Vorsprungs eingreift.

Wie bereits erläutert, ist die Weichkomponente, vorzugsweise umlaufend entlang einer umlaufenden Berührfläche zwischen dem Oberteil und dem Unterteil angeordnet. Insbesondere alle Berührflächen, welche sich an Außenwänden der Kabelabdichtung befinden, sind durch eine Weichkomponente auf der Oberseite oder der Unterseite und einer hierzu korrespondierenden Hartkomponente auf der jeweilig anderen Ober- bzw. Unterseite gebildet. Die umlaufenden Berührflächen können entsprechend der Beschreibung der Berührflächen an den Vorsprüngen gebildet sein.

Die Öffnung in der Außenwand des Gehäuses ist vorzugsweise ausreichend, ein Kabel aufzunehmen, insbesondere ein Kabel samt Isolierung. Die durch die Vorsprünge umschriebene äußere Öffnung hat vorzugsweise einen größeren Querschnitt als die innere Öffnung in der Außenwand des Gehäuses, da die durch die Vorsprünge umschriebene äußere Öffnung zur Aufnahme einer Dichtung eines Steckelementes gebildet ist.

Das Steckelement wird formschlüssig in die durch die Vorsprünge gebildete Aufnahme mit seiner Dichtung eingesteckt. Die Dichtung liegt dann umlaufend an der Innenwand der durch die Vorsprünge gebildeten Aufnahme an.

Es wird vorgeschlagen, dass die Vorsprünge im Fügezustand einen ersten Öffnungsquerschnitt bilden. Im Fügezustand bilden die Ausnehmungen an den Außenwänden des Gehäuses im Bereich der Vorsprünge einen zweiten, gegenüber dem ersten Öffnungsquerschnitt kleineren Öffnungsquerschnitt. Durch diesen kleineren Querschnitt wird ein Boden der Aufnahme, welche durch die Vorsprünge gebildet ist, beschrieben. Dieser Boden ist durch die Öffnung in der Außenwand durchbrochen. An dem Boden kann eine Stirnfläche der Dichtung des Steckelementes anliegen. Im eingeschobenen Zustand des Steckelementes wird die Dichtung des Steckelementes mit einer Axialkraft gegen den Boden gedrückt. Eine Radialkraft, insbesondere eine Stauchkraft, führt dazu, dass die Dichtung gegen die innere Wand der Aufnahme, welche durch die Vorsprünge gebildet ist, gedrückt wird.

Die Öffnung, welche durch die Vorsprünge gebildet ist und die Öffnung, welche in den Außenwänden gebildet ist, sind bevorzugt konzentrisch. Insbesondere ist der Boden umlaufend mit vorzugsweise einem gleichen Abstand zwischen der inneren Öffnung an den Außenwänden und der Innenwand der Vorsprünge gebildet.

Wie bereits erläutert, bilden die Vorsprünge im Fügezustand eine Aufnahme für ein Steckelement.

Das Steckelement ist erfindungsgemäss an dem Gehäuse vorgesehen, in welches das Kabel eingeführt werden soll. Es soll verhindert werden, dass im Bereich der Kabeleinführung in das Gehäuse Feuchtigkeit eindringt. Gleichzeitig soll das Steckelement möglichst modular sein und bei einer Vielzahl von Gehäusen zum Einsatz kommen können.

Erfindungsgemäss wird das Steckelement als von dem Gehäuse eigenständiges Bauteil gebildet, wobei das Steckelement aus einer Hartkomponente und einer Weichkomponente gebildet ist. Die Hartkomponente dient zum Anschluss des Steckelements an das Gehäuse und kann als Träger für die Weichkomponente dienen. In der Hartkomponente ist vorzugsweise eine Öffnung vorgesehen, innerhalb derer die Weichkomponente angeordnet ist. Die Weichkomponente ist am Steckelement angeordnet und als Dichtung ausgeführt.

Für Einsätze bei hohen Temperaturen, insbesondere über 125 °C, wird in der Regel Silikon als Isolationsmaterial für Kabel verwendet. Ein Schrumpfschlauch dichtet nicht erfolgreich gegenüber Silikon ab. Um eine erfolgreiche Abdichtung bereitzustellen, wird vorgeschlagen, dass die Weichkomponente aus einem Silikon gebildet ist.

Für Einsätze bei geringen Temperaturen, insbesondere unter 105 °C, wird in der Regel TPE als Isolationsmaterial für Kabel verwendet. In diesem Fall kann die Weichkomponente auch aus einem TPE gebildet sein.

Die nachfolgend beschriebenen Prozesse und Materialien gelten, soweit möglich, sowohl für das Gehäuse bzw. die Gehäuseteile als auch für das Steckelement.

Für eine besonders prozessoptimierte Herstellung wird vorgeschlagen, dass die Weichkomponenten zusammen mit der Hartkomponente gemeinsam spritzgegossen ist. In einem gemeinsamen Spritzgussprozess werden vorzugsweise zwei unterschiedliche Materialien in eine gemeinsame Spritzgussform gespritzt. Die Dichtung wird dabei aus einem sich vernetzenden Silikon gespritzt und die Hartkomponente wird vorzugsweise aus einem anderen Kunststoff, beispielsweise PBT oder dergleichen in die gleiche Spritzgussform gespritzt.

Die Hart- als auch die Weichkomponente kann dabei vorzugsweise so ausgestaltet sein, dass deren Materialien die geforderten Festigkeitsanforderungen in einem großen Temperaturbereich, insbesondere zwischen -40°C und + 180°C aufweisen. Hierdurch wird der Einsatz der Kabelabdichtung in automotiven Anwendungen ermöglicht.

Wie bereits erläutert, werden Hart- als auch Weichkomponente in ein gemeinsames Spritzgussgehäuse gespritzt. Insofern wird vorgeschlagen, dass die Weichkomponente zusammen mit der Hartkomponente gemeinsam in einem Zwei-Komponenten-Spritzgussverfahren hergestellt ist. Durch den Zwei-Komponenten-Spritzguss entsteht ein einteiliges Bauteil, welches jedoch aus zwei verschiedenen Werkstoffen, vorliegend insbesondere Silikon und einem anderen Kunststoff, insbesondere PBT gebildet ist. Der Übergang zwischen der Hart- als auch der Weichkomponente entsteht bereits während der Herstellung und die Materialien bilden einen vernetzten Übergang. Dabei können die Materialien durch Adhäsion aneinander anhaften. Die Hartkomponente ist vorzugsweise steifer als die Weichkomponente. Auch kann die Hartkomponente ein höheres Elastizitätsmodul als die Weichkomponente haben.

Zur Befestigung des Steckelements an dem Gehäuse ist es notwendig, dass ein fester Sitz, insbesondere ein verliersicherer Sitz gewährleistet ist. Auch ist es notwendig, dass die Dichtung eine ausreichende Dichtwirkung gegenüber dem Kabel bzw. dessen Isolierung entfaltet. Durch die elastische Verformung der Weichkomponente soll es möglich sein, dass Kabel durch das Steckelement hindurchzuführen und gleichzeitig soll durch die Rückstellkraft der Weichkomponente eine ausreichende Dichtung gegenüber Wassereintritt gewährleistet sein. Die Hartkomponente bzw. das Steckelement ist vorzugsweise mit dem vorzugsweise aus Kunststoff gebildeten Gehäuse formschlüssig, verliersicher verbunden.

Erfindungsgemäss ist die Dichtung zumindest am Innenumfang der Öffnung des Steckelements angeordnet.

Durch die Öffnung des Steckelements wird das Kabel durch die Kabelabdichtung hindurchgeschoben. Im Bereich der Öffnung des Steckelements kann die Dichtung an dem Kabel bzw. dessen Isolierung angreifen.

Gemäß einem Ausführungsbeispiel wird vorgeschlagen, dass die Dichtung vollständig umlaufend am Innenumfang der Öffnung des Steckelements angeordnet ist. Eine vollständig umlaufende Dichtung gewährleistet eine sichere Abdichtung gegenüber eintretendem Wasser.

Gemäß einem Ausführungsbeispiel wird vorgeschlagen, dass sich die Dichtung des Steckelements in axialer Richtung über die Öffnung des Steckelements hinaus in einen Dichtungsabschnitt erstreckt. Die Dichtung ist vorzugsweise so gestaltet, dass sie einerseits die Öffnung des Steckelements gegenüber dem Kabel abdichtet und andererseits das Steckelement gegenüber dem Gehäuse.

In dem Gehäuse ist die Öffnung vorgesehen, in welche das Kabel eingesteckt werden kann. Außen am Gehäuse kann das Steckelement an den Vorsprüngen befestigt werden. Dabei kann das Steckelement die Vorsprünge vollständig umgreifen. Zwischen dem Äußeren des Gehäuses und des Inneren des Gehäuses muss das Steckelement jedoch gegenüber dem Gehäuse abgedichtet werden. Hierzu ist die Dichtung vorgesehen, die über die Öffnung des Steckelements hinaus sich in axialer Richtung erstreckt und es mit Hilfe des Dichtungsabschnittes ermöglicht, das Steckelement am Gehäuse und gleichzeitig an der Isolation des Kabels abzudichten.

Um eine Abdichtung gegenüber einer Gehäusewand zu ermöglichen, insbesondere gegenüber der Innenwand der Vorsprünge, wird vorgeschlagen, dass sich der Dichtungsabschnitt in radialer Richtung über eine Begrenzungswand der Öffnung des Steckelements hinaus erstreckt. Somit hat die Dichtung vorzugsweise einen größeren Durchmesser als die Öffnung des Steckelements. Insbesondere steht die Dichtung im Bereich des Dichtungsabschnitts über die Begrenzungswand der Öffnung hinaus ab, so dass ein mechanischer Kontakt mit einer Öffnung in dem Gehäuse, insbesondere den Innenwänden der Vorsprünge, die im Fügezustand die äußere Öffnung mit einem Innenumfang bilden, ermöglicht wird. Die Dichtung liegt somit an dem Gehäuse bzw. der Öffnung in dem Gehäuse, insbesondere der Innenwand der Vorsprünge, vorzugsweise umlaufend an und dichtet hierüber das Steckelement gegenüber dem Gehäuse ab.

Dies wird dadurch gewährleistet, dass der Dichtungsabschnitt eine in radialer Richtung größere Erstreckung hat, als eine Begrenzungswand der Öffnung des Steckelements. In dem Steckelement ist eine Öffnung vorgesehen, die durch eine vorzugsweise umlaufende Begrenzungswand definiert ist. An dieser Begrenzungswand kann die Dichtung angeordnet werden. Durch die durch die Begrenzungswand definierte Öffnung des Steckelements wird das Kabel bzw. das Kabel mit seiner Isolierung hindurchgeschoben. An der Begrenzungswand kann die Dichtung ein Gegenlager erfahren, so dass die Dichtung beim Einschieben des Kabels zwischen dem Kabel und der Begrenzungswand gestaucht wird. Hierdurch entsteht eine Rückstellkraft, welche zur Abdichtung des Kabels in der Öffnung des Steckelements dient. Gleichzeitig kann die Begrenzungswand bzw. die äußere Umfangsfläche der Begrenzungswand das Steckelement gegenüber dem Gehäuse begrenzen.

Um das Steckelement abgedichtet an dem Gehäuse befestigen zu können, erstreckt sich die Dichtung auch über die Begrenzungswand hinweg radial nach außen, so dass sie auch an einer Gehäusewand, insbesondere den Innenwänden der Vorsprünge anliegen und ebenfalls abdichten kann. Die beiden Bereiche der Dichtung, der zur Abdichtung am Kabel und der zur Abdichtung am Gehäuse können auch räumlich voneinander getrennt als zwei zueinander abgegrenzte Bereiche gebildet sein.

Gemäß einem Ausführungsbeispiel wird vorgeschlagen, dass die Dichtung zumindest einen radial nach innen weisenden Vorsprung hat. Insbesondere hat die Dichtung axial nebeneinander angeordnete radial nach innen weisende Vorsprünge. Eine Abfolge von mehreren Vorsprüngen hintereinander erleichterte zum einen das Einführen des Kabels in die Öffnung. Bei einer axialen Bewegung kann die Dichtung somit im Bereich der Vorsprünge federnd ausweichen, wodurch das Einführen des Kabels erleichtert wird. Radiale Vorsprünge können entsprechend auch als radial nach außen weisende Vorsprünge gebildet sein, so dass die Kabelabdichtung auch besonders einfach in das Gehäuse eingeschoben werden kann.

Insbesondere die Abdichtung von Flachleitungen, insbesondere von Aluminiumflachleitungen, ist noch nicht gänzlich gelöst. Aluminiumflachleitungen sind in der Regel mit einem rechteckigen Profil und müssen zum Anschluss an weitere elektrische Verbraucher in einem Kraftfahrzeug vorzugsweise an einem Übergabepunkt mit einer Kupferleitung verbunden werden. Im Bereich dieser Verbindung zwischen dem Aluminiumflachleiter und der Kupferleitung ist ein besonderer Schutz vor Feuchtigkeit notwendig, da Kontaktkorrosion höchst problematisch ist. Eine Kabelabdichtung im Sinne des Gegenstandes für ein rechteckiges Kabelprofil ist dann möglich, wenn die Öffnung des Steckelements und/oder des Gehäuses ebenfalls ein rechteckiges Profil hat. In eine solche Kabelabdichtung kann dann ein Flachkabel mit einem rechteckigen Profil eingeschoben werden und somit beispielsweise in einem Gehäuse mit einem Kupferkabel verbunden werden.

Auch ist es vorteilhaft, wenn das Steckelement an seinem Außenumfang zumindest ein Befestigungsmittel zur Befestigung an dem Gehäuse aufweist. Das Steckelement wird an dem Gehäuse fixiert, so dass er verliersicher die Kabelabdichtung an dem Gehäuse hält.

Mit Hilfe der Befestigungsmittel wird das Steckelement axial in Richtung des Gehäuses gezogen. Hierdurch wird eine Kraft auf die in dem Steckelement gebildeten Rücksprünge ausgeübt, welche über die Koppelelemente gesteckt ist. Diese Zugkraft führt zu einer Anpresskraft der Teilkoppelemente aufeinander zu. Dadurch wird erreicht, dass das Oberteil auf das Unterteil des Gehäuses im Fügezustand gedrückt wird. Hierdurch wird auch erreicht, dass im Bereich der aneinander anliegenden Vorsprünge eine Abdichtung in radialer Richtung gewährleistet ist.

Gemäß einem Ausführungsbeispiel wird vorgeschlagen, dass das Befestigungsmittel lösbar an einem Gehäuse befestigt werden kann, insbesondere dass das Befestigungsmittel zumindest ein Teil einer Schnappverbindung ist. Das Gehäuse kann im Bereich seiner Öffnung, in die die Kabelabdichtung eingeschoben wird, eine Ausnehmung, Aussparung, Nut oder einen Vorsprung aufweisen, mit dem das Befestigungsmittel der Kabelabdichtung einen Formschluss eingehen kann. Insbesondere kann durch das Befestigungsmittel ein solcher Formschluss zu dem Gehäuse hergestellt werden, dass eine anschließende Bewegung des Steckelements in axialer Richtung verhindert ist. Auch kann eine Drehbewegung durch die Befestigungsmittel in der Öffnung des Gehäuses verhindert werden.

Im eingeschobenen Zustand dichtet die Kabelabdichtung gegenüber dem Gehäuse mit Hilfe seiner Dichtung ab. Insbesondere kann die Dichtung an einer Innenwand der Kabeldurchführung elastisch verformt anliegen.

Die Dichtung am Steckelement erstreckt sich in axialer Richtung derart, dass im verbundenen Zustand, das heißt beim Befestigen des Steckelementes an dem Gehäuse eine Stirnfläche der Dichtung umlaufend an dem Boden in der inneren Öffnung anliegt. Durch ein Verrasten der Befestigungsmittel an einer Erhebung an der Außenseite der Vorsprünge kann eine axial gerichtete Anpresskraft die Dichtung gegen den Boden des Gehäuses pressen.

Die Hartkomponente des Steckelements erstreckt sich vorzugsweise von einer äußeren Stirnfläche des Steckelements, in der die Öffnung für das Kabel vorgesehen ist, in axialer Richtung. Dabei ist das Steckelement so gebildet, dass es die Vorsprünge an dem Gehäuse im Fügezustand vollständig umgreift. An bevorzugt zwei einander gegenüberliegenden Seiten können die Befestigungsmittel angeordnet sein. Die Ausnehmung, welche mit den Koppelelementen korrespondiert, kann ebenfalls an zwei gegenüberliegenden Seiten des Steckelements angeordnet sein.

Ein weiterer Aspekt ist eine Anordnung nach Anspruch 21 mit einem elektrischen Kabel und einer Kabelabdichtung mit einem Gehäuse.

Nachfolgend wird der Gegenstand anhand einer Ausführungsbeispiele zeigenden Zeichnung näher erläutert.
- Fig. 1: eine Kabelabdichtung in einer Ansicht gemäß einem Ausführungsbeispiel;
- Fig. 2: die Kabelabdichtung gemäß Fig. 1 in einer Seitenansicht;
- Fig. 3: eine Kabelabdichtung gemäß Fig. 1 in einer Schnittansicht;
- Fig. 4a-c: verschiedene Ansichten eines Steckelementes;
- Fig. 5: eine Schnittansicht durch eine Kabelabdichtung gemäß Fig. 1.

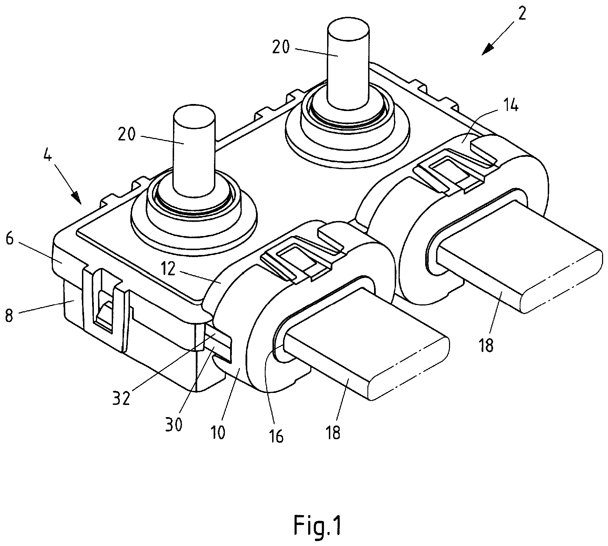

Fig. 1 zeigt eine Kabelabdichtung 2 mit einem Gehäuse 4 mit einem Oberteil 6 und einem Unterteil 8. Das Oberteil 6 und das Unterteil 8 sind mittels eines Steckelements 10, welches auf Vorsprünge 22, 24 geschoben ist miteinander gefügt. Durch eine Öffnung 16 des Steckelements 10 ist ein bevorzugt isoliertes Kabel 18 geführt. Die Kabelabdichtung 2 ist für zwei Kabel 18 vorgesehen, die beschriebene Abdichtung kann jedoch für jede beliebige Anzahl an Kabeln 18 hergerichtet sein.

In der Kabelabdichtung 2 ist an den als Flachleitung gebildeten Kabeln 18 jeweils ein Bolzen 20 angeschweißt. Im Bereich dieses Übergangs von Kabel 18 auf Bolzen 20 entsteht eine gegebenenfalls sortenunreine metallische Verbindung, die vor Korrosion geschützt werden muss. Aus diesem Grunde ist die Kabelabdichtung 2 vorgesehen.

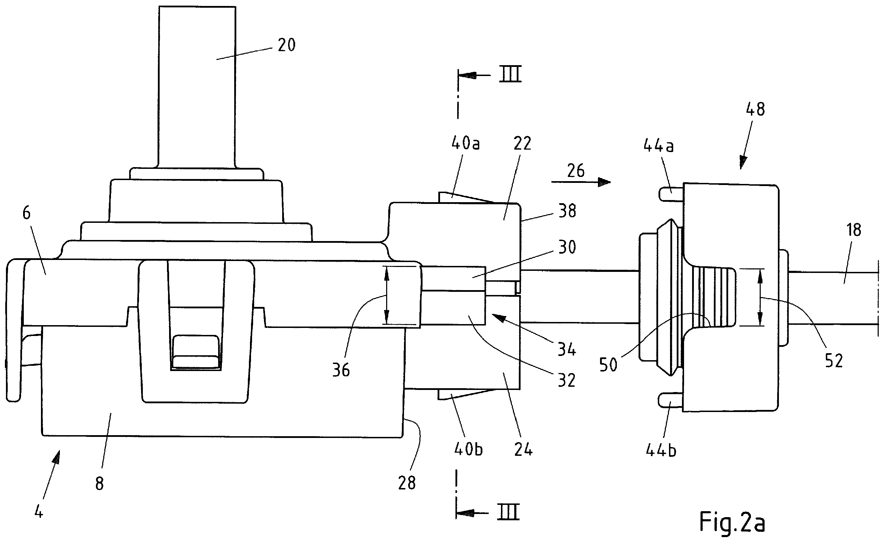

Fig. 2a zeigt eine Kabelabdichtung 2 gemäß Fig. 1 in einer Seitenansicht. Ein Kabel 18 ist in das Gehäuse 4 eingesteckt. Zu erkennen ist, dass sowohl an der Oberseite 6 als auch an der Unterseite 8 jeweils ein Vorsprung 22, 24 vorgesehen ist. Die Vorsprünge 22, 24 erstrecken sich in axialer Richtung 26 von einer Gehäusewand 28 weg.

Zu erkennen ist, dass an einem jeweiligen Vorsprung 22, 24 jeweils ein Teilkoppelelement 30, 32 vorgesehen ist, welche im gezeigten Fügezustand zu einem Koppelelement 34 gefügt sind. Das Koppelelement 34 erstreckt sich ausgehend von der Gehäusewand entlang der Vorsprünge 22, 24 in axialer Richtung 26. Es hat somit eine Erstreckung in einer Länge. Darüber hinaus erstrecken sich die Koppelelemente 30, 32 in einer Breite 36. Die Vorsprünge 22, 24 fügen sich zu den Vorsprüngen 12, 14 gemäß Fig. 1 im gefügten Zustand.

Die Erstreckung in der Breite 36 verändert sich in axiale Richtung 26. Hierbei verjüngt sich das Koppelelement 34 ausgehend von der Gehäusewand 28 in Richtung einer Stirnseite 38 der Vorsprünge 22, 24. Es ist jedoch auch möglich, dass die Erstreckung in der Breite 36 konstant ist, dann ist aber die Ausnehmung 50 des Steckelements 48 sich verjüngend gebildet, wie nachfolgend beschrieben.

Auf gegenüberliegenden Seiten der Vorsprünge 22, 24 sind die Koppelelemente 30, 32 angeordnet. Ferner sind Erhebungen 40a, 40b auf der äußeren Mantelfläche der Vorsprünge 22, 24 vorgesehen, die mit Befestigungsmitteln 44a, 44b eines Steckelementes 48 korrespondieren.

Das Steckelement 48 hat Ausnehmungen 50, welche auf gegenüberliegenden Seiten des Steckelements 48 vorgesehen sind. Die Ausnehmungen 50 korrespondieren zu den Koppelelementen 34. Die Erstreckung in der Breite 52 kann konstant in axialer Richtung 26 sein. Auch kann die Erstreckung in der Breits 52 in axialer Richtung sich verjüngen. In beiden Fällen kann die Erstreckung in der Breite 52 der Ausnehmung 50 zumindest in Teilen geringer sein, als die Erstreckung in der Breite 36 des Koppelelementes 34.

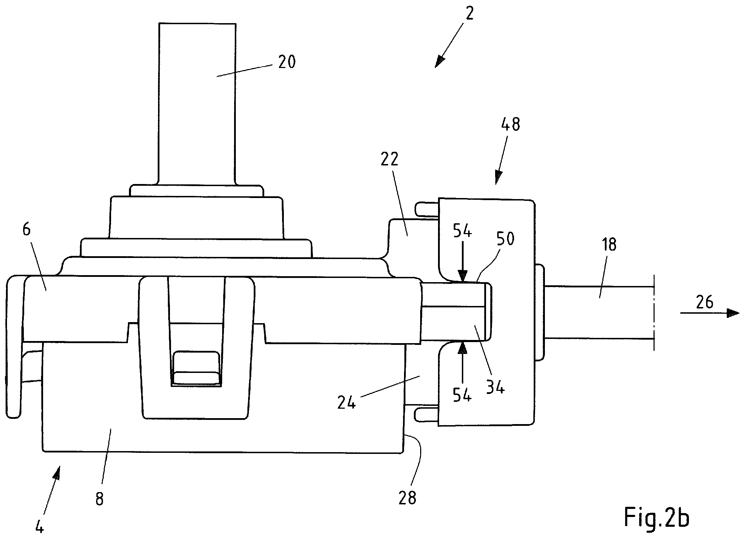

Dies führt dazu, dass beim Aufschieben des Steckelements 48 auf die Vorsprünge 22, 24, wie in der Fig. 2b gezeigt, die Ausnehmung 50 das Koppelelement 34 zusammendrückt. Hierdurch entsteht eine Anpresskraft 54, mit der die Vorsprünge 20, 24 aufeinandergedrückt werden. Hierdurch werden die Stirnflächen der Vorsprünge 22, 24 gegeneinandergedrückt. Dies führt dazu, dass im Bereich der Vorsprünge 22, 24 diese im Bereich ihrer Fügenaht eine Abdichtung erfahren.

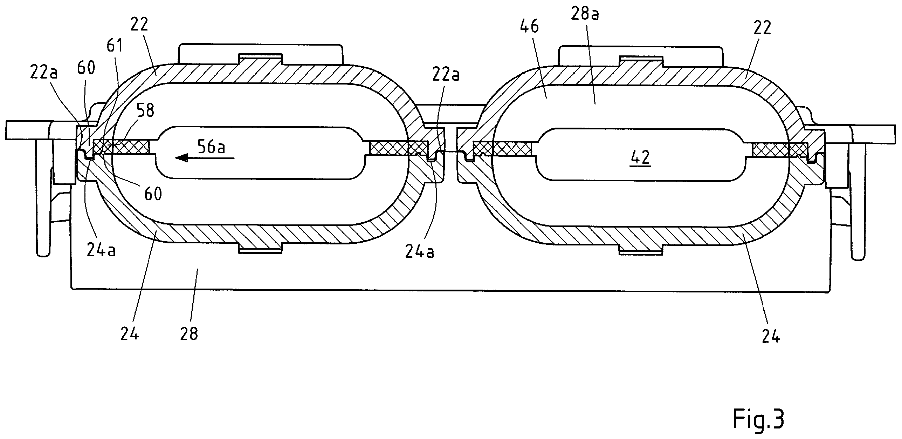

Diese Abdichtung ist in der Fig. 3 näher erläutert. In der Fig. 3 ist eine Schnittansicht durch die Vorsprünge in einer Ebene parallel zur Gehäusewand 28 gezeigt. Zu erkennen ist, dass die Vorsprünge 22, 24 Stirnfläche 22a, 24a aufweisen. Die Stirnfläche 22a hat eine Weichkomponente 58 als Berührfläche. Die Stirnfläche 24a hat eine Erhebung oder Nase als Berührfläche. Zumindest an den Berührflächen liegen die Stirnflächen 22a, 24a aneinander an. Die Stirnflächen 22a, 24a sind zumindest in Teilen korrespondierend zueinander profiliert. Zu erkennen ist, dass die Stirnfläche 22a in radialer Richtung 56a zunächst aus einer Weichkomponente 58 und anschließend aus einer Hartkomponente 60 gebildet ist. Die Stirnfläche 24a des Vorsprungs 24 ist vollkommen aus einer Hartkomponente 60 gebildet.

Ferner ist zu erkennen, dass die Stirnflächen 22a, 24a in der Art einer Nut-Feder Verbindung geformt sind, wobei eine Feder der Stirnfläche 22a in eine Nut der Stirnfläche 24a eingreift.

Darüber hinaus ist zu erkennen, dass die Feder der Stirnfläche 22a die Weichkomponente 58 überragt. Dies erzeugt einen zusätzlichen Schutz, da die Weichkomponente von außen (entgegen Richtung 56a) nicht direkt dem Medieneinfluss ausgesetzt wird.

Ferner ist zu erkennen, dass eine Erhebung 61 in der Form bspw. einer Nase in einer der Stirnflächen 24a, 22a gebildet ist. Die gezeigte Erhebung 61 ist in der Stirnfläche 24a gebildet. Die Erhebung 61 greift im Fügezustand in die Weichkomponente 58 ein. Durch Aufschieben des Steckelements 48, wie beschrieben, werden die Vorsprünge 22, 24 aufeinandergedrückt, so dass die Stirnflächen 22a, 24a mit einer Kraft aufeinander gedrückt werden. Hierbei dringt die Erhebung 61 in die Weichkomponente 58 ein und führt zu einer Abdichtung in radialer Richtung 56a.

Ferner ist in der Fig. 3 zu erkennen, dass das Gehäuse an seiner Gehäusewand 28 eine innere Öffnung 42 und eine durch die Vorsprünge 22, 24 umschriebene äußere Öffnung 46 aufweisen.

Zwischen der inneren Öffnung 42 und der äußeren Öffnung 46 ergibt sich ein Boden 28a an der Gehäusewand 28. Der Boden 28a ist umlaufend um die innere Öffnung 42 und aus der Außenwand von Oberteil 6 und Unterteil 8 sowie im Bereich des Übergangs zwischen Oberteil 6 und Unterteil 8 aus einer Weichkomponente 58 gebildet. Die Vorsprünge 22, 24 umschließen im gefügten Zustand vollständig die äußere Öffnung 46.

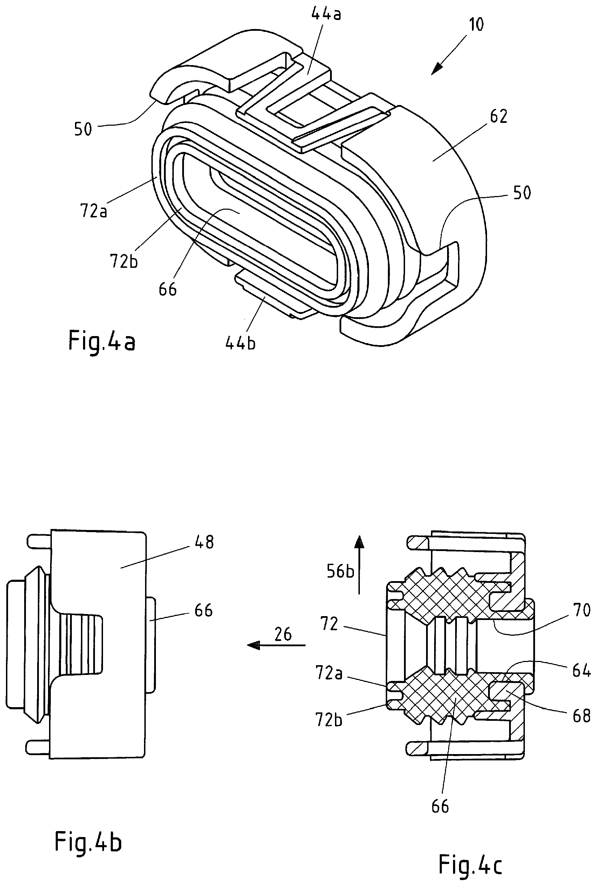

Fig. 4a zeigt eine Ansicht eines Steckelements 48. Zu erkennen ist, dass das Steckelement 48 eine umlaufende Mantelfläche 62 aufweist, welche im Fügezustand die Vorsprünge 22, 24 vollständig umgreift. Ferner ist zu erkennen, dass die Ausnehmung 50 beidseitig auf gegenüberliegenden Seiten des Steckelements 48 an der Mantelfläche 62 vorgesehen ist. Ferner ist auch gezeigt, dass die Befestigungsmittel 44a, 44b aufeinander gegenüberliegenden Seiten des Steckelements 48 gebildet sind.

In dem Steckelement 48 ist eine Öffnung 64 vorgesehen, in welcher eine Dichtung 66 angeordnet ist.

Die Öffnung 64 ist durch eine Begrenzungswand 68 umlaufend begrenzt. An der Begrenzungswand 68 liegt umlaufend die Dichtung 66 an, wie in der Fig. 4c zu erkennen ist.

Die Dichtung 66 erstreckt sich in axialer Richtung 26 über die Öffnung 64 hinaus. Ferner erstreckt sich die Dichtung 66 in radialer Richtung 56b über die Öffnung 64 hinaus.

In den Fig. 4b und c ist zu erkennen, wie die Dichtung 66 profiliert ist. In radialer Richtung 56b ist an einer äußeren Mantelfläche der Dichtung 66 die Oberfläche wellenförmig, so dass sich Bereiche ergeben, die eine größere radiale Ausdehnung haben, als andere Bereiche. Durch diese Wellenform wird erreicht, dass die Dichtung 66 an den Innenwänden der Vorsprünge 22, 24 im gefügten Zustand anliegen.

Eine innere Mantelfläche 70 der Dichtung 66 ist ebenfalls wellenförmig profiliert. Hierdurch wird eine besonders gute Abdichtung des Kabels 18 im eingeschobenen Zustand erreicht. Schließlich ist stirnseitig 72 die Dichtung 66 mit zwei Lippen 72a, b, welche umlaufend sind, gebildet. Die Lippen 72a, b liegen an einem Boden einer Öffnung des Gehäuses an, wie nachfolgend noch gezeigt werden wird.

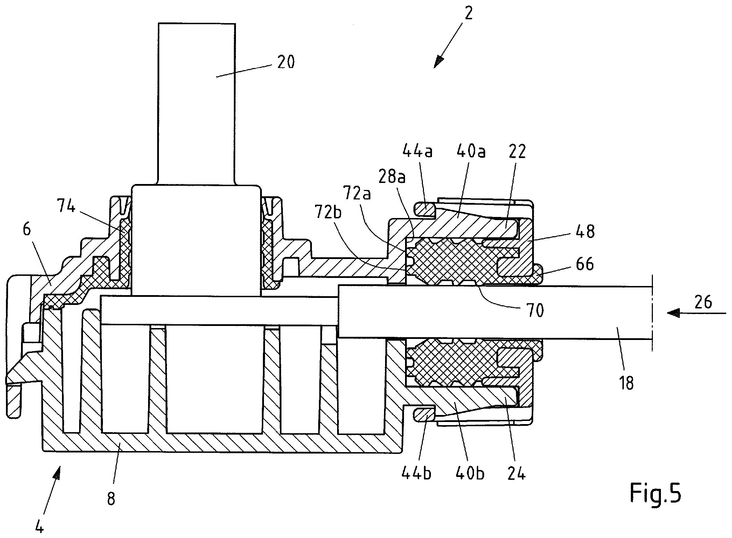

Fig. 5 zeigt die Kabelabdichtung 2 im gefügten Zustand. Das Steckelement 48 ist auf die Vorsprünge 22, 24 aufgeschoben. Die Befestigungsmittel 44a, b sind in den Erhebungen 40a, b eingerastet, wodurch eine Kraft in axialer Richtung 26 auf die Stirnseite 72 der Dichtung 66 ausgeübt wird und die Lippen 72a, 72b an dem Boden 28a angedrückt werden.

Ferner ist zu erkennen, dass die Dichtung 66 mit dem profilierten Querschnitt an der äußeren Mantelfläche an der Innenseite der Vorsprünge 22, 24 anliegt. Das Kabel 18 liegt an der inneren Mantelfläche 70 der Dichtung 66 an.

Durch die Anpresskraft durch die Ausnehmung 50 gegenüber dem Koppelelement 34 wird die Oberseite 6 auf die Unterseite 8 des Gehäuses 4 gepresst.

In der Fig. 5 ist ferner zu erkennen, dass das Kabel 18 in dem Gehäuse 4 mit dem Bolzen 20 verbunden ist. Der Bolzen 20 ist über eine Dichtung 74 gegenüber dem Inneren des Gehäuses 4 abgedichtet.

### Bezugszeichenliste

- 2: Kabelabdichtung
- 4: Gehäuse
- 6: Oberteil
- 8: Unterteil
- 10: Steckelement
- 12, 14: Vorsprung
- 16: Öffnung
- 18: Kabel
- 20: Bolzen
- 22, 24: Vorsprung
- 22a,: 24a Stirnfläche
- 26: axiale Richtung
- 28: Gehäusewand
- 30, 32: Teilkoppelelement
- 34: Koppelelement
- 36: Erstreckung der Breite
- 38: Stirnseite
- 40a, b: Erhebung
- 42: innere Öffnung
- 44a, b: Befestigungsmittel
- 46: äußere Öffnung
- 48: Steckelement
- 50: Ausnehmung
- 52: Erstreckung in der Breite
- 54: Anpresskraft
- 56a, b: radiale Richtung
- 58: Weichkomponente
- 60: Hartkomponente
- 61: Erhebung
- 62: Mantelfläche
- 64: Öffnung
- 66: Dichtung
- 68: Begrenzungswand
- 70: innere Mantelfläche
- 72: Stirnseite
- 72a, b: Lippen
- 74: Dichtung

## Patentansprüche

1. Kabelabdichtung (2) mit
- einem Steckelement (10, 48),
- einem zumindest zweiteiligen Gehäuse (4) mit einem Oberteil (6) und einem Unterteil (8),
- einer als Kabeleinführung in das Gehäuse (4) gebildeten Öffnung (42, 46),
- wobei das Oberteil (6) und das Unterteil (8) jeweils einen Teil der Öffnung (42, 46) bilden und
- die Öffnung (42, 46) zumindest in Teilen aus von einer Außenwand des Gehäuses (4) in einer axialen Richtung (26) nach außen weisenden Vorsprüngen (12, 14, 22, 24) gebildet ist, wobei einer (12, 22) der Vorsprünge an dem Oberteil (6) und einer (14, 24) der Vorsprünge an dem Unterteil (8) gebildet ist, wobei
- im Fügezustand des Gehäuses (4) aneinander anliegende Teile der Vorsprünge (22, 24) sich in einer radialen Richtung (56a) erstreckende Teilkoppelelemente (30, 32) aufweisen, wobei die Teilkoppelelemente (30, 32) im Fügezustand zu einem Koppelelement (34) ergänzen, über welches eine Anpresskraft (54) zwischen dem Oberteil (6) und dem Unterteil (8) im Bereich der Vorsprünge (22, 24) aufnehmbar ist, wobei die Vorsprünge (22, 24) im Fügezustand eine Aufnahme für das Steckelement (10, 48) bilden,
- und wobei das Steckelement (10, 48) eine Offnung (64) für ein Kabel (18) aufweist, **dadurch gekennzeichnet,**
- **dass** umlaufend am Innenumfang der Offnung (64) des Steckelements (10, 48) eine als Dichtung (66) gebildete Weichkomponente und umlaufend am Außenumfang der Öffnung (16) des Steckelements (10) eine Hartkomponente (62, 68) angeordnet ist.

2. Kabelabdichtung (2) nach Anspruch 1,
**dadurch gekennzeichnet,**
- **dass** die aneinander anliegenden Vorsprünge einander zugewandte Stirnflächen (22a, 24a) aufweisen und dass die Stirnfläche (22a, 24a) von einem ersten der Vorsprünge als Nut gebildet ist und dass die Stirnfläche (22a, 24a) von einem zweiten an dem ersten Vorsprung (22) anliegenden Vorsprung (24) als Feder gebildet ist und/oder
- **dass** die aneinander anliegenden Vorsprünge (22, 24) einander zugewandte Stirnflächen (22a, 24a) aufweisen und dass die Stirnfläche (22a, 24a) von einem ersten der Vorsprünge eine Weichkomponente (58) aufweist und dass die Stirnfläche (22a, 24a) von einem zweiten an dem ersten Vorsprung (22) anliegenden Vorsprung (24) eine im Fügezustand in die Weichkomponente (58) des ersten der Vorsprünge elastisch eingreifenden Erhebung (61) aufweist.

3. Kabelabdichtung (2) nach Anspruch 2,
**dadurch gekennzeichnet,**
- **dass** sich die Stirnflächen (22a, 24a) axial entlang der Vorsprünge (12, 14) erstrecken.

4. Kabelabdichtung (2) nach einem der vorangehenden Ansprüche 2 oder 3,
**dadurch gekennzeichnet,**
- **dass** die Stirnflächen (22a, 24a) radial nach außen durch ihre Weichkomponente (58) und ihre Hartkomponente (60) gebildet sind, wobei die Hartkomponente (60) die Weichkomponente (58) in einer Projektion parallel zur Stirnfläche (22a, 24a) überragt.

5. Kabelabdichtung (2) nach einem der vorangehenden Ansprüche 2 bis 4, **dadurch gekennzeichnet,**
- **dass** die Weichkomponente (58) des ersten der Vorsprünge (12, 22) umlaufend entlang einer Berührfläche zwischen dem Oberteil (6) und dem Unterteil (8) angeordnet ist.

6. Kabelabdichtung (2) nach einem der vorangehenden Ansprüche,
**dadurch gekennzeichnet,**
- **dass** die Vorsprünge (22, 24) im Fügezustand einen ersten Öffnungsquerschnitt bilden
und **dass** im Fügezustand aneinander liegenden Außenwände im Bereich der Vorsprünge einen zweiten, gegenüber dem ersten Öffnungsquerschnitt kleineren Öffnungsquerschnitt bilden.

7. Kabelabdichtung (2) nach einem der vorangehenden Ansprüche,
**dadurch gekennzeichnet,**
- **dass** das Steckelement (10, 48) zumindest eine Ausnehmung (50) aufweist, wobei
die Ausnehmung (50) im Fügezustand in das Koppelelement (34) eingreift somit die Anpresskraft (54) auf Oberteil (6) und Unterteil (8) ausübt, insbesondere dass sich die Ausnehmung (50) in axialer Richtung verjüngt und/oder dass sich das Koppelelement (34) in axialer Richtung verjüngt.

8. Kabelabdichtung (2) nach einem der vorangehenden Ansprüche,
**dadurch gekennzeichnet,**
- **dass** sich die Dichtung (66) in axialer Richtung über die Öffnung (64) des Steckelements (10, 48) hinaus in einen Dichtungsabschnitt erstreckt.

9. Kabelabdichtung (2) nach Anspruch 8,
**dadurch gekennzeichnet,**
- **dass** sich der Dichtungsabschnitt in radialer Richtung über eine Begrenzungswand (68) der Öffnung (64) des Steckelements (10) hinaus erstreckt
und/oder
- **dass** der Dichtungsabschnitt eine in radialer Richtung größere Erstreckung hat als eine Begrenzungswand (68) der Öffnung (64) des Steckelements (10).

10. Kabelabdichtung (2) nach einem der vorangehenden Ansprüche, **dadurch gekennzeichnet,**
- **dass** die Dichtung (66) zumindest einen radial nach innen weisenden Vorsprung hat, insbesondere dass die Dichtung (66) axial nebeneinander angeordnete, radial nach innen weisende Vorsprünge hat.

11. Kabelabdichtung (2) nach einem der vorangehenden Ansprüche, **dadurch gekennzeichnet,**
- **dass** die Öffnung (64) des Steckelements (10) und oder die Öffnung (42) des Gehäuses (4) ein rechteckiges oder rundes Profil aufweist.

12. Kabelabdichtung (2) nach einem der vorangehenden Ansprüche, **dadurch gekennzeichnet,**
- **dass** das Steckelement (10) an seinem Außenumfang zumindest ein Befestigungsmittel (44a, b) zur Befestigung an dem Gehäuse (4) aufweist.

13. Kabelabdichtung (2) nach Anspruch 12, **dadurch gekennzeichnet,**
- **dass** das Befestigungsmittel (44a, b) lösbar an dem Gehäuse (4) befestigt werden kann, insbesondere dass das Befestigungsmittel (44a, b) ein Teil einer Schnappverbindung ist und/oder
- **dass** das Befestigungsmittel (44a, b) die Öffnung (42) U-förmig umgreift.

14. Kabelabdichtung (2) nach einem der vorangehenden Ansprüche,
**dadurch gekennzeichnet,**
- **dass** die Dichtung (66) im Fügezustand zwischen den Vorsprüngen (22, 24) angeordnet ist und dass die Hartkomponente (62, 68) des Steckelements (10) im Fügezustand die Vorsprünge umgreift.

15. Anordnung mit einer Kabelabdichtung (2) nach einem der vorangehenden Ansprüche und einem elektrischen Kabel (18), wobei das elektrische Kabel (18) mit einer Isolierung ummantelt ist und durch in das Gehäuse (4) der Kabelabdichtung (2) geführt ist.

## Claims

1. Cable sealing (2) with
- a plug-in element (10, 48),
- a housing (4) in at least two parts with an upper part (6) and a lower part (8),
- an opening (42, 46) arranged as a cable entry into the housing (4), wherein
- the upper part (6) and the lower part (8) each forming a part of the opening (42, 46), and
- the opening (42, 46) is formed at least in parts from projections (12, 14, 22, 24) pointing outward in an axial direction (26) from an outer wall of the housing (4), one (12, 22) of the projections being arranged on the upper part (6) and one (14, 24) of the projections being arranged on the lower part (8), wherein
- in the joint state of the housing (4), parts of the projections (22, 24) which lie against each other have partial coupling elements (30, 32) which extend in a radial direction (56a), the partial coupling elements (30,32) complementing each other, in the joint state, to form a coupling element (34) via which a pressing force (54) between the upper part (6) and the lower part (8) can be received in the region of the projections (22, 24) wherein
- the projections (22, 24) form a receptacle for the plug-in element (10,48) in the joint state, and wherein the plug-in element (10, 48) has an opening (16) for a cable (18),
**characterized in that**
- a soft-component formed as a seal (66) is arranged circumferentially at the inner circumference of the opening (64) of the plug-in element (10, 18) and a hard component (62, 68) is arranged circumferentially at the outer circumference of the opening (16) of the plug-in element (10).

2. Cable sealing (2) according to claim 1,
**characterized in that**
- the projections lying against each other have end faces (22a, 24a) facing each other and the end face (22a, 24a) of a first of the projections is formed as a groove and the end face (22a, 24a) of a second projection (24) lying against the first projection (22) is formed as a tongue and/or
- the projections (22, 24) lying against each other have end faces (22a, 24a) facing each other, and the end face (22a, 24a) of a first of the projections has a soft component (58), and **in that** the end face (22a, 24a) of a second projection (24) lying against the first projection (22) has a projection (61) which elastically engages with the soft component (58) in the joint state.

3. Cable sealing (2) according claim 2,
**characterized in that**
- the end faces (22a,24a) extend axially along the projections (12, 14).

4. Cable sealing (2) according to one of the preceding claims 2 or 3,
**characterized in that**
- the end faces (22a, 24a) are formed radially outwards by their soft component (58) and their hard component (60), the hard component (60) projecting over the soft component (58) in a projection parallel to the end face (22a, 24a).

5. Cable sealing (2) according to one of the preceding claims 2 to 4,
**characterized in that**
- the soft component (58) of the first projection (12, 22) is arranged circumferentially along a contact surface between the upper part (6) and the lower part (8).

6. Cable sealing (2) according to one of the preceding claims,
**characterized in that**
- in the joint state, the projections (22, 24) form a first opening cross-section in the joint state and **in that**, outer walls lying against each other in the joint state form a second opening cross-section in the region of the projections which is smaller than the first opening cross-section.

7. Cable sealing (2) according to one of the preceding claims,
**characterized in that**
- the plug-in element (10, 48) has at least one recess (50), the recess (50) engaging with the coupling element (34) in the joint state, thus exerting the pressing force (54) on the upper part (6) and lower part (8), in particular **in that** the recess (50) tapers in the axial direction and/or the coupling element (34) tapers in the axial direction.

8. Cable sealing (2) according to one of the preceding claims,
**characterized in that**
- the seal (66) extends in the axial direction beyond the opening (64) of the plug in element (10, 48) into a sealing section.

9. Cable sealing (2) according to claim 8,
**characterized in that**
- the sealing section extends in the radial direction beyond a boundary wall (68) of the opening (64) of the plug-in element (10) and/or
- the sealing section has a greater extent in the radial direction than a boundary wall (68) of the opening (64) of the plug-in element (10).

10. Cable sealing (2) according to one of the preceding claims,
**characterized in that**
- the seal (66) has at least one projection pointing radially inwards, in particular **in that** the seal (66) has projections arranged axially next to each other and pointing radially inwards.

11. Cable sealing (2) according to one of the preceding claims,
**characterized in that**
- the opening (64) of the plug-in element (10) and/or the opening (42) of the housing (4) has a rectangular or round profile.

12. Cable sealing (2) according to one of the preceding claims,
**characterized in that**
- the plug-in element (10) has on its outer circumference at least one fastening means (44a, b) for fastening to the housing (4).

13. Cable sealing (2) according to claim 12,
**characterized in that**
- the fastening means (44a, b) can be detachably fastened to a housing (4), in particular **in that** the fastening means (44a, b) is part of a snap connection and/or
- the fastening means (44a, b) embraces the opening (42) in a U-shape.

14. Cable sealing (2) according to one of the preceding claims,
**characterized in that**
- the seal (66) is arranged between the projections (22, 24) in the joint state and the hard component (62, 68) of the plug in element embraces the projections in the joint state.

15. Arrangement with a cable sealing (2) according to one of the preceding claims and an electric cable (18), wherein the electric cable (18) is sheathed with an insulation and passed into the housing (4) of the cable sealing (2).

## Revendications

1. Raccord étanche de câble (2) avec
- un élément enfichable (10,48),
- un boîtier en au moins deux parties (4) avec une partie supérieure (6) et une partie inférieure (8),
- une ouverture (42, 46) formée comme une entrée de câble dans le boîtier (4),
- où la partie supérieure (6) et la partie inférieure (8) forment chacune une partie de l'ouverture (42, 46) et
- l'ouverture (42, 46) est formée au moins en partie de saillies (12, 14, 22, 24) dirigées vers l'extérieur à partir d'une paroi extérieure du boîtier (4) dans une direction axiale (26),
- où une (12, 22) des projections est formée sur la partie supérieure (6) et une (14, 24) des projections est formée sur la partie inférieure (8),
- où des parties des saillies (22, 24), qui se touchent à l'état assemblé du boîtier (4), présentent des éléments d'accouplement partiels (30, 32) s'étendant dans une direction radiale (56a), les éléments d'accouplement partiels (30, 32) se complétant à l'état assemblé pour former un élément d'accouplement (34) par lequel une force de pression (54) peut être absorbée entre la partie supérieure (6) et la partie inférieure (8) dans la zone des saillies (22, 24),
- où les saillies (22, 24), à l'état assemblé, forment un réceptacle pour l'élément enfichable (10, 48), et
- où l'élément enfichable (10,48) a une ouverture (64) pour un câble (18),
**caractérisé**
- **en ce qu'**un composant souple réalisé sous forme de joint (66) est disposé sur le pourtour intérieur de l'ouverture (64) de l'élément enfichable (10, 48) et un composant dur (62, 68) est disposé sur le pourtour extérieur de l'ouverture (16) de l'élément enfichable (10).

2. Raccord étanche de câble (2) selon la revendication 1,
**caractérisé**
- **en ce que** les saillies contiguës présentent des faces frontales (22a, 24a) tournées l'une vers l'autre, et que la face frontale (22a, 24a) d'une première des saillies est réalisée sous forme de rainure, et que la face frontale (22a, 24a) d'une deuxième saillie (24) contiguë à la première saillie (22) est réalisée sous forme de languette, et/ou
- **en ce que** les saillies (22, 24) contiguës présentent des faces frontales (22a, 24a) tournées l'une vers l'autre, et que la face frontale (22a, 24a) d'une première des saillies présente une composante souple (58), et en ce que la face frontale (22a, 24a) d'une deuxième saillie (24) contiguë à première saillie (22) présente une aspérité (61) qui, à l'état assemblé, s'engage élastiquement dans la composante souple (58) de la première des saillies.

3. Raccord étanche de câble (2) selon la revendication 2,
**caractérisé**
- **en ce que** les faces frontales (22a, 24a) s'étendent axialement le long des saillies (12,14).

4. Raccord étanche de câble (2) selon l'une des revendications précédentes 2 ou 3, **caractérisé**
- **en ce que** les faces frontales (22a, 24a) sont formées radialement vers l'extérieur par leur composante souple (58) et leur composante dure (60), la composante dure (60) dépassant la composante souple (58) dans une projection parallèle à la face frontale (22a, 24a).

5. Raccord étanche de câble (2) selon l'une des revendications précédentes 2 à 4, **caractérisé**
- **en ce que** la partie souple (58) de la première des saillies (12, 22) est disposée circonférentiellement le long d'une surface de contact entre la partie supérieure (6) et la partie inférieure (8).

6. Raccord étanche de câble (2) selon l'une des revendications précédentes, **caractérisé**
- **en ce que** les projections (22, 24), en l'état assemblé, forment une première section d'ouverture, et
- **en ce que** les parois extérieures contiguës, à l'état assemblé, forment, dans la zone des saillies, une deuxième section d'ouverture qui est plus petite que la première section d'ouverture.

7. Raccord étanche de câble (2) selon l'une des revendications précédentes, **caractérisé**
- **en ce que** l'élément enfichable (10, 48) comporte au moins un évidement (50),
- où l'évidement (50), à l'état assemblé, s'engage dans l'élément d'accouplement (34), exerçant ainsi la pression de contact (54) sur la partie supérieure (6) et la partie inférieure (8), en particulier
- **en ce que** l'évidement (50) se rétrécit dans la direction axiale et/ou que l'élément d'accouplement (34) se rétrécit dans la direction axiale.

8. Raccord étanche de câble (2) selon l'une des revendications précédentes, **caractérisé**
- **en ce que** le joint (66) s'étend en direction axiale au-delà de l'ouverture (64) de l'élément enfichable (10, 48) dans une section d'étanchéité.

9. Raccord étanche de câble (2) selon la revendication 8,
**caractérisé**
- **en ce que** la section d'étanchéité s'étend dans la direction radiale au-delà d'une paroi de délimitation (68) de l'ouverture (64) de l'élément enfichable (10) et/ou
- **en ce que** la section d'étanchéité a une plus grande étendue dans la direction radiale qu'une paroi de délimitation (68) de l'ouverture (64) de l'élément enfichable (10).

10. Raccord étanche de câble (2) selon l'une des revendications précédentes, **caractérisé**
- **en ce que** le joint (66) comporte au moins une saillie orientée radialement vers l'intérieur, en particulier que le joint (66) comporte des saillies axialement juxtaposées orientées radialement vers l'intérieur.

11. Raccord étanche de câble (2) selon l'une des revendications précédentes, **caractérisé**
- **en ce que** l'ouverture (64) de l'élément enfichable (10) et/ou l'ouverture (42) du boîtier (4) a un profil rectangulaire ou rond.

12. Raccord étanche de câble (2) selon l'une des revendications précédentes, **caractérisé**
- **en ce que** l'élément enfichable (10) présente, sur sa circonférence extérieure, au moins un moyen de fixation (44a, b) pour une fixation au boîtier (4).

13. Raccord étanche de câble (2) selon la revendication 12,
**caractérisé**
- **en ce que** le moyen de fixation (44a, b) peut être fixé de manière amovible au boîtier (4), en particulier en ce que le moyen de fixation (44a, b) fait partie d'un assemblage par encliquetage, et/ou
- **en ce que** le moyen de fixation (44a, b) s'engage autour de l'ouverture (42) en forme de U.

14. Raccord étanche de câble (2) selon l'une des revendications précédentes, **caractérisé**
- **en ce que** le joint (66) est disposé entre les saillies (22, 24) dans l'état assemblé, et
- **en ce que**, à l'état assemblé, le composant dur (62, 68) de l'élément enfichable (10) s'engage autour des projections.

15. Agencement comprenant un raccord étanche de câble (2) selon l'une des revendications précédentes et un câble électrique (18), où le câble électrique (18) est gainé d'une isolation et est guidé à travers le boîtier (4) du raccord étanche de câble (2).
